(19) Europäisches Patentamt / European Patent Office / Office européen des brevets

(11) **EP 4 657 586 A1**

(12) **EUROPEAN PATENT APPLICATION**
published in accordance with Art. 153(4) EPC

(43) Date of publication:
03.12.2025 Bulletin 2025/49

(21) Application number: 24925155.4

(22) Date of filing: 02.04.2024

(51) International Patent Classification (IPC):
$H01M\ 10/0525^{(2010.01)}$  $H01M\ 10/42^{(2006.01)}$
$H01M\ 50/451^{(2021.01)}$  $H01M\ 50/489^{(2021.01)}$

(86) International application number:
PCT/CN2024/085688

(87) International publication number:
WO 2025/208379 (09.10.2025 Gazette 2025/41)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Shenzhen Senior Technology Material
Co., Ltd.
Shenzhen, Guangdong 518106 (CN)

(72) Inventors:
• XIE, Yankun
Shenzhen, Guangdong 518106 (CN)

• ZHENG, Lin
Shenzhen, Guangdong 518106 (CN)
• LIN, Lujing
Shenzhen, Guangdong 518106 (CN)
• XUE, Nanxiang
Shenzhen, Guangdong 518106 (CN)
• QI, Cai
Shenzhen, Guangdong 518106 (CN)
• WU, Zhongma
Shenzhen, Guangdong 518106 (CN)
• WANG, Yanjie
Shenzhen, Guangdong 518106 (CN)

(74) Representative: J A Kemp LLP
80 Turnmill Street
London EC1M 5QU (GB)

(54) **COMPOSITE SEPARATOR AND USE THEREOF**

(57) The present application provides a composite separator and an application thereof. The composite separator includes a separator substrate and an electrolyte layer provided on at least one surface of the separator substrate. The electrolyte layer at least comprises inorganic nanotubes and solid electrolyte particles. A volume fraction of through-pores of the inorganic nanotubes in the electrolyte layer is 0.2%-5%. The composite separator not only has excellent heat resistance and electrolyte solution wettability, but also has excellent lithium-ion transport performance when applied to a battery, thereby reducing the internal resistance of the lithium-ion battery and improving the rate performance and cycle performance of the lithium-ion battery.

FIG. 1

**Description**

## TECHNICAL FIELD

Embodiments of the present application relates to a composite separator and application thereof, which belongs to the technical field of energy.

## BACKGROUND

A separator is provided between a positive electrode and a negative electrode of a lithium-ion battery to prevent the problem of short circuit caused by direct contact of the positive electrode and the negative electrode. The performance of the separator will directly affect the performance of the lithium-ion battery. However, a polyolefin separator commonly used currently has the problems of low melting point and poor electrolyte solution wettability. The separator is prone to shrink during the use of the lithium-ion battery, causing the positive electrode and negative electrode to come into contact to result in short circuit. This is not conducive to the service life of the battery, and is prone to cause safety hazards.

To solve this problem, in the prior art, an ordinary ceramic coating such as alumina or boehmite, or a thermoplastic resin coating such as PVDF, polyimide, or aramid is provided on a surface of the polyolefin separator, to improve the heat resistance and electrolyte solution wettability of the polyolefin separator. However, this method is prone to reduce the transport performance of lithium ions and increase the internal resistance of the lithium-ion battery.

## SUMMARY

The present application provides a composite separator, which not only has excellent heat resistance and electrolyte solution wettability, but also has excellent lithium-ion transport performance when applied to a battery, thereby reducing the internal resistance of the lithium-ion battery and improving the rate performance and cycle performance of the lithium-ion battery.

The present application provides a battery, including the above-mentioned composite separator, and thus the battery has excellent safety performance, rate performance, and cycle performance.

The present application provides a composite separator, where the composite separator includes a separator substrate and an electrolyte layer provided on at least one surface of the separator substrate;

the electrolyte layer at least includes inorganic nanotubes and solid electrolyte particles; and
a volume fraction of through-pores of the inorganic nanotubes in the electrolyte layer is 0.2%-5%.

In the composite separator as described above, based on a total mass of the electrolyte layer, the inorganic nanotubes have a mass percentage content of 5%-60%.

In the composite separator as described above, the inorganic nanotubes have an inner diameter of 3 nm - 150 nm.

In the composite separator as described above, a ratio of an outer diameter of the inorganic nanotubes to the inner diameter of the inorganic nanotubes is (1.5-20):1.

In the composite separator as described above, the inorganic nanotubes have a length of 0.3 $\mu$m - 5 $\mu$m.

In the composite separator as described above, a ratio of the length of the inorganic nanotubes to D50 of the solid electrolyte particles is greater than 0 and not more than 30.

In the composite separator as described above, the solid electrolyte particles have a particle size distribution equal to or less than 1.5.

In the composite separator as described above, the composite separator satisfies at least one of the following:

a. the separator substrate has a thickness of 5 $\mu$m - 30 $\mu$m; and
b. the electrolyte layer has a thickness of 0.5 $\mu$m - 4 $\mu$m.

In the composite separator as described above, the electrolyte layer further includes at least one of a dispersant, a wetting agent, a binder, and a thickener.

In the composite separator as described above, the composite separator satisfies at least one of the following:

a. based on the total mass of the electrolyte layer, the binder has a mass percentage content of 3%-10%;
b. based on the total mass of the electrolyte layer, the dispersant has a mass percentage content of 0.1%-1.5%;
c. based on the total mass of the electrolyte layer, the thickener has a mass percentage content of 0.1%-3%; and
d. based on the total mass of the electrolyte layer, the wetting agent has a mass percentage content of 0.1%-1.5%.

The present application provides a battery, which includes the above-described composite separator.

The composite separator of the present application includes the separator substrate and the electrolyte layer provided on at least one surface of the separator substrate. The electrolyte layer at least includes the inorganic nanotubes and the solid electrolyte particles, and the volume fraction of the through-pores of the inorganic nanotubes is 0.2%-5% in the electrolyte layer. When applied to the battery, the composite separator not only has excellent heat resistance and electrolyte solution wettability, but also has excellent lithium-ion transport performance. This can reduce the internal resistance of the lithium-ion battery and improve the rate performance and cycle performance of the lithium-ion battery.

The battery of the present application includes the above-mentioned separator, and thus it has excellent electrochemical performance and can be widely promoted and applied.

## BRIEF DESCRIPTION OF DRAWINGS

FIG. 1 is a SEM image (with a magnification of 10K) of a surface of a composite separator in Example 2 of the present application.

FIG. 2 is a SEM image (magnified by 10K) of a cross-section of the composite separator in Example 2 of the present application.

## DESCRIPTION OF EMBODIMENTS

In order to make the purpose, technical solutions and advantages of the embodiments of the present application more clear, the technical solutions of the embodiments of the present application will be described clearly and comprehensively in combination with the accompanying drawings in the embodiments of the present application. Obviously, the described embodiments are part of, rather than all of, the embodiments of the present application. Based on the embodiments in the present application, all other embodiments obtained by those skilled in the art without any creative labor shall fall within the protection scope of the present application.

A first aspect of the present application provides a composite separator, including a separator substrate and an electrolyte layer provided on at least one surface of the separator substrate;

the electrolyte layer at least includes inorganic nanotubes and solid electrolyte particles; and
a volume fraction of through-pores of the inorganic nanotubes in the electrolyte layer is 0.2%-5%.

In the present application, the surface of the separator substrate refers to two surfaces of the separator substrate which have largest areas and are oppositely arranged. In the present application, one surface of the separator substrate can be provided with the electrolyte layer to form a composite separator, or two surfaces of the separator substrate can be provided with the electrolyte layer to form a composite separator.

In the present application, the separator substrate is not particularly limited, and the separator substrate may be a porous film commonly used in the field. For example, the separator substrate may be a polyolefin porous film, or a polyolefin porous film having a coating layer.

The polyolefin porous film can be a polyethylene porous film, a polypropylene porous film, or a polyethylene-polypropylene multi-layer composite separator. The polyethylene-polypropylene multi-layer composite separator refers to a multi-layer composite porous film formed by stacking polypropylene (PP) and polyethylene (PE) in any order, such as a three-layer PP-PE-PP composite separator, a double-layer PP-PE composite separator, and a four-layer PP-PP-PE-PP composite separator.

The polyolefin porous film having the coating layer refers to a polyolefin porous film, at least one surface of which is provided with a coating layer, where the coating layer is not particularly limited and can be selected from coating layers commonly used in the field as desired. For example, it can be a coating layer including at least one of alumina, boehmite, nanofibers, polyimide, PMMA, and PVDF. For example, the polyolefin porous film having the coating layer can be a polyolefin porous film coated with alumina, a polyolefin porous film coated with boehmite, a polyolefin porous film coated with nanofibers, a polyolefin porous film coated with polyimide, a polyolefin porous film coated with PMMA, or a polyolefin porous film coated with PVDF. The polyolefin porous film provided with the coating layer can also be a polyolefin porous film coated with a mixture of nanofibers and alumina, a polyolefin porous film coated with a mixture of PVDF and alumina, or a polyolefin porous film coated with a mixture of PMMA and alumina.

In the present application, the electrolyte layer at least includes the inorganic nanotubes and the solid electrolyte particles, and a material of the inorganic nanotubes is not particularly limited in the present application. The inorganic nanotubes can be tubular inorganic nanomaterials commonly used in the field, and for example, the inorganic nanotubes can be at least one of titanium dioxide nanotubes, silicon nanotubes, Halloysite nanotubes, alumina nanotubes, zinc oxide nanotubes, boron nitride nanotubes, and silicon carbide nanotubes. The solid electrolyte particles are not particularly limited in the present application, and the solid electrolyte can be a solid electrolyte commonly used in the field, and for example, the solid electrolyte can be at least one of LATP, LAGP, LLZO and LLZTO. Furthermore, the solid electrolyte can be LATP.

In the present application, the volume fraction of the through-pores of the inorganic nanotubes in the electrolyte layer refers to a ratio of pore volume provided by the through-pores of the inorganic nanotubes to a total volume of the electrolyte layer. In some embodiments, the volume fraction of the through-pores of the inorganic nanotubes in the electrolyte layer can be obtained by Formula 1:

$$P = \left[ \left( \frac{x(m_2 - m_1)}{\rho} \times \left( \frac{d_2}{d_1} \right)^2 \right) / h \right] \times 100\% \qquad \text{Formula 1;}$$

in Formula 1, $x$ is a mass percentage content of the inorganic nanotubes based on a total mass of the electrolyte layer;
$\rho$ is a tap density of the inorganic nanotubes, with an unit of $g/cm^3$;
$d_1$ is an outer diameter of the inorganic nanotubes, with an unit of nm;
$d_2$ is an inner diameter of the inorganic nanotubes, with an unit of nm;
$m_1$ is a mass of the separator substrate per unit area, with an unit of $g/cm^2$;
$m_2$ is a mass of the composite separator per unit area, with an unit of $g/cm^2$;
$h$ is a thickness of the electrolyte layer, with an unit of cm.

Herein, the inner diameter and the outer diameter of the inorganic nanotubes can be determined by conventional techniques known in the field, for example, by field emission transmission electron microscopy (TEM). This specifically includes: obtaining a TEM image of the electrolyte layer according to GB/T 18907-2013 "Microbeam Analysis, Analytical Electron Microscopy, and Transmission Electron Microscope Selected Area Electronic Diffraction Analysis Method", where from the TEM image of the electrolyte layer, hollow structures of the inorganic nanotubes can be clearly observed; and obtaining sizes of the inner diameter and the outer diameter of the inorganic nanotubes by scale measurement.

The tap density of the inorganic nanotubes can be determined by conventional techniques known in the field, for example, by the test according to GBT21354-2008 "General Determination Method of Tap Density of Powder Products".

The mass of the separator substrate per unit area can be determined by conventional techniques known in the field, for example, by a weighing method, specifically including: cutting the separator substrate to a 5 cm×5 cm sample, weighing the sample, and calculating the mass of the separator substrate per unit area.

The mass of the composite separator per unit area can be determined by conventional techniques known in this field, such as a weighing method, specifically including: cutting the composite separator to a 5 cm×5 cm sample, weighing the sample, and calculating the mass of the composite separator per unit area.

The thickness of the electrolyte layer can be determined by conventional techniques known in the field, for example, by the test method specified in the national standard GB/T 36363-2018 to obtain the thickness of the electrolyte layer, or by measuring using scanning electron microscopy to obtain the thickness of the electrolyte layer. It should be noted that the thickness of the electrolyte layer is a thickness of a single-layer electrolyte layer, that is, the thickness of the electrolyte layer refers to the thickness of the electrolyte layer on one surface of the separator substrate when both surfaces of the separator substrate are provided with the electrolyte layer respectively.

Exemplarily, the volume fraction of the through-pores of the inorganic nanotubes in the electrolyte layer can be any one of 0.2%, 0.3%, 0.4%, 0.5%, 0.7%, 0.8%, 1%, 1.1%, 1.2%, 1.3%, 1.5%, 1.8%, 2%, 2.1%, 2.3%, 2.5%, 2.7%, 2.9%, 3%, 3.5%, 4%, 4.5%, and 5%, or a range composed of any two of these values. Furthermore, the volume fraction of the through-pores of the inorganic nanotubes in the electrolyte layer is 0.2%-3%.

In the present application, both of the solid electrolyte particles and the inorganic nanotubes have excellent heat resistance performance, which can improve the heat resistance of the composite separator. The composite separator can still maintain its complete shape during the charging and discharging process of the battery, avoiding the short circuit resulting from the contact between the positive electrode and the negative electrode due to the heat shrinkage of the composite separator during the charging and discharging process of the battery. Especially, the inorganic nanotubes have a one-dimensional nanostructure, which can further improve the heat resistance of the composite separator after adhering with the separator substrate. Meanwhile, the solid electrolyte particles and the inorganic nanotubes can also improve the electrolyte solution wettability of the composite separator.

Furthermore, the solid electrolyte in the composite separator can promote the lithium-ion transport performance, and the solid electrolyte can undergo redox reactions with the electrodes of the battery during the charging and discharging process of the battery, forming a dense interfacial film on the surface of the composite separator, which can improve the cycle performance of the battery. However, the formation of the dense interfacial film can also lead to a significant increase of the internal resistance of the battery, affecting the complete release of the battery performance (such as energy density, rate performance). The inorganic nanotubes can not only provide more transport channels for lithium ions, but also form nanochannels in the surface of the interfacial film for transporting lithium ions during the formation of the interfacial film by the solid electrolyte particles, avoiding the decrease in performances of the battery during the formation of the interfacial film. Therefore, the composite separator including the inorganic nanotubes and the solid electrolyte particles has excellent lithium-ion transport performance and heat shrinkage resistance. The composite separator can significantly improve the safety performance, rate performance, cycle performance, and energy density of the lithium-ion battery when applied to the battery.

The inventors also find in the research that when the volume fraction of the through-pores of the inorganic nanotubes in the electrolyte layer is 0.2%-5%, this is not only conducive to improving the ion transport efficiency of the composite separator and reducing the internal resistance of the battery, thereby improving the electrochemical performance of the battery, but also can provide excellent adhesion between the electrolyte layer and the separator substrate, avoiding the separation of the electrolyte layer from the separator substrate during the charging and discharging process of the battery, and then effectively improving the safety performance of the battery. Therefore, the composite separator of the present application can significantly improve the safety performance, rate performance, cycle performance, and energy density of the battery when applied to the battery.

The manner of regulating the volume fraction of the through-pores of the inorganic nanotubes in the electrolyte layer is not particularly limited in the present application is. As long as the ranges for the above-mentioned various features can be satisfied, the regulation manner can be freely selected according to the purpose.

As a preferred technical solution of the present application, in order to further improve the comprehensive performance of the composite separator, parameters such as the amount of the inorganic nanotubes, the inner diameter of the inorganic nanotubes, the outer diameter of the inorganic nanotubes, etc. can be controlled in the present application. In some embodiments of the present application, based on the total mass of the electrolyte layer, the inorganic nanotubes have a mass percentage content of 5%-60%.

Exemplarily, based on the total mass of the electrolyte layer, the mass percentage content of the inorganic nanotubes can be any one of 5%, 10%, 13%, 15%, 18%, 20%, 22%, 25%, 28%, 30%, 33%, 35%, 38%, 40%, 42%, 45%, 48%, 50%, 55%, and 60%, or a range composed of any two of these values. Furthermore, based on the total mass of the electrolyte layer, the mass percentage content of the inorganic nanotubes is 10 wt% - 50 wt%. Furthermore, based on the total mass of the electrolyte layer, the mass percentage content of the inorganic nanotubes is 13 wt% - 50 wt%.

When the mass percentage content of the inorganic nanotubes satisfies the above ranges, the inorganic nanotubes and the solid electrolyte particles can form a better "dot-line-shaped" nano network structure where the particles and the nanotubes are distributed uniformly. This results in good adhesion performance obtained between the solid electrolyte composite coating layer and the separator substrate, and can improve the lithium-ion transport performance of the composite separator, thereby obtaining the composite separator with excellent comprehensive performance.

In some embodiments of the present application, the inner diameter of the inorganic nanotubes is 3 nm - 150 nm. Exemplarily, the inner diameter of the inorganic nanotubes can be any one of 3 nm, 10 nm, 20 nm, 40 nm, 60 nm, 100 nm, 130 nm, and 150 nm, or a range composed of any two of these values.

Furthermore, the inner diameter of the inorganic nanotubes is 5-150 nm.

When the inner diameter of the inorganic nanotubes satisfies the above ranges, more transport channels can be provided for lithium ions, allowing the lithium ions to achieve rapid transport in the composite separator. Therefore, when the composite separator is applied to the battery, the internal resistance of the battery can be further reduced and the rate performance and energy density of the battery can be improved.

In some embodiments of the present application, a ratio of the outer diameter of the inorganic nanotubes to the inner diameter of the inorganic nanotubes is (1.5-20):1.

The ratio of the outer diameter of the inorganic nanotubes to the inner diameter of the inorganic nanotubes can be any one of 1.5:1, 2:1, 2.5:1, 3:1, 3.5:1, 4:1, 4.5:1, 5:1, 5.5:1, 6:1, 6.5:1, 7:1, 7.5:1, 8:1, 8.5:1, 9:1, 9.5:1, 10:1, 10.5:1, 11:1, 12:1, 13:1, 14:1, 15:1, 16:1, 17:1, 18:1, 19:1, and 20:1, or a range composed of any two of these values. Furthermore, the ratio of the outer diameter of the inorganic nanotubes to the inner diameter of the inorganic nanotubes is (2-15):1.

When the ratio of the outer diameter of the inorganic nanotubes to the inner diameter of the inorganic nanotubes satisfies the above ranges, this further ensures that the inorganic nanotubes are more closely lapped and better adhered to each other, and the resulting network structure is more solid while ensuring the rapid transport of lithium ions in the composite separator.

The inventors also find that when a length of the inorganic nanotubes is 0.3 $\mu$m - 5 $\mu$m, the inorganic nanotubes can be more closely lapped with each other, allowing the through-pores of the inorganic nanotubes to distribute more uniformly and densely in the electrolyte layer. This is more conducive to the transport of lithium ions, in addition, the network structure formed by the close packing of the inorganic nanotubes is more conducive to improving the heat resistance of the composite separator. Exemplarily, the length of the inorganic nanotubes can be any one of 0.3 $\mu$m, 0.5 $\mu$m, 0.8 $\mu$m, 1 $\mu$m,

1.2 µm, 1.5 µm, 1.7 µm, 1.9 µm, 2 µm, 2.3 µm, 2.5 µm, 2.7 µm, 2.9 µm, 3 µm, 3.5 µm, 3.8 µm, 4 µm, 4.5 µm, 4.8 µm, and 5 µm, or a range composed of any two of these values. Furthermore, the length of the inorganic nanotubes is 0.3 µm - 2 µm.

In some embodiments, the length of the inorganic nanotubes can be obtained according to the industry standard JY/T 0584-2020 "General Rules for Analytical Methods of Scanning Electron Microscopy".

In some embodiments of the present application, a ratio of the length of the inorganic nanotubes to D50 of the solid electrolyte particles is greater than 0 and not more than 30.

Exemplarily, the ratio of the length of the inorganic nanotubes to the D50 of the solid electrolyte particles can be any one of 30, 25, 20, 15, 10, 9, 8, 7, 6, 5, 4, 3, 2, and 1, or a range composed of any two of these values. Furthermore, the ratio of the length of the inorganic nanotubes to the D50 of the solid electrolyte particles is equal to or less than 20.

When the length of the inorganic nanotubes and the D50 of the solid electrolyte particles satisfy the above relationship, the inorganic nanotubes can be better matched with the solid electrolyte, resulting in a denser electrolyte layer, thereby improving the comprehensive performance of the composite separator.

In some embodiments of the present application, the solid electrolyte particles have a particle size distribution (SPAN) equal to or less than 1.5.

Exemplarily, the particle size distribution of the solid electrolyte particles can be any one of 1.5, 1.4, 1.3, 1.2, 1.0, 0.9, 0.8, 0.7, 0.6, 0.5, 0.3, and 0.1, or a range composed of any two of these values. Furthermore, the particle size distribution of the solid electrolyte particles is 0.8-1.5.

In some embodiments, the D10, D50, and D90 of the solid electrolyte particles can be determined using a laser particle size analyzer, and then the particle size distribution SPAN of the solid electrolyte particles can be calculated according to Formula 2;

$$SPAN = (D90-D10)/D50 \qquad \text{Formula 2.}$$

When the particle size distribution of the solid electrolyte particles satisfies the above ranges, the inorganic nanotubes and the solid electrolyte particles can be better matched, resulting in a denser electrolyte layer, thereby improving the comprehensive performance of the composite separator.

In some embodiments, the particle size of the solid electrolyte particles can be determined by conventional techniques known in the field. For example, the D50, D90, and D10 of the solid electrolyte particles can be characterized using a laser scattering particle size analyzer (Malvern ZEN3690 particle size analyzer), specifically including: dispersing the solid electrolyte particles in pure water and obtaining the D50, D90, and D10 of the solid electrolyte particles. Additionally, the D50, D90, and D10 of the solid electrolyte can also be obtained by scanning the electrolyte layer with a scanning electron microscope (SEM) and statistically analyzing the scanning results (e.g., using Image J software). The particle size corresponding to the cumulative particle size distribution percentage reaching 10% is defined as D10 of the solid electrolyte particles, the particle size corresponding to the cumulative particle size distribution percentage reaching 50% is defined as D50 of the solid electrolyte particles, and the particle size corresponding to the cumulative particle size distribution percentage reaching 90% is defined as D90 of the solid electrolyte particles.

In some embodiments of the present application, when the composite separator satisfies at least one of the following:

    a. the separator substrate has a thickness of 5 µm - 30 µm, and
    b. the electrolyte layer has a thickness of 0.5 µm - 4 µm, the obtained composite separator can further enhance the electrochemical performance of the battery when applied to the battery. The thickness of the electrolyte layer refers to the thickness of a single-layer electrolyte layer.

In the present application, in order to improve the adhesion between the electrolyte layer and the separator substrate to allow the electrolyte layer to be more closely attached to the surface of the separator substrate, the electrolyte layer further includes at least one of a dispersant, a wetting agent, a binder, and a thickener.

The binder is not particularly limited in the present application, for example, the binder may be at least one of a polyacrylate copolymer, a polyacrylamide copolymer, a polyurethane copolymer, a polyimide copolymer, a polyetherimide copolymer, a polyurea copolymer, and a styrene-butadiene rubber copolymer.

The dispersant is not particularly limited in the present application, for example, the dispersant may be at least one of sodium salt of polyacrylate copolymer, ammonium salt of polyacrylate copolymer, and ammonium salt of alkanol containing acidic group.

The thickener is not particularly limited in the present application, for example, the thickener may be at least one of sodium carboxymethylcellulose, gas-phase silica, modified urea-type polymer, organic-modified silicate, organic-modified montmorillonite, and organic bentonite.

The wetting agent is not particularly limited in the present application, for example, the wetting agent may be at least one of polyether siloxane copolymer, organosilicon gemini structure copolymer, polyacrylate copolymer, polyether-modified silicone oil copolymer, and polyoxyethylene alkyl amine copolymer.

The mass percentage contents of the binder, the dispersant, the thickener, and the wetting agent are not particularly limited in the present application, and their additive contents can be freely selected according to the purpose.

As a preferred technical solution of the present application, the composite separator has more excellent comprehensive performance when the composite separator satisfies at least one of the following:

> a. based on the total mass of the electrolyte layer, the binder has a mass percentage content of 3%-10%,
> b. based on the total mass of the electrolyte layer, the dispersant has a mass percentage content of 0.1%-1.5%,
> c. based on the total mass of the electrolyte layer, the thickener has a mass percentage content of 0.1%-3%, and
> d. based on the total mass of the electrolyte layer, the wetting agent has a mass percentage content of 0.1%-1.5%. The composite separator can improve the electrochemical performance of the battery when applied to the battery, and broaden the application scenarios of the battery.

Exemplarily, the mass percentage content of the binder can be any one of 3%, 4%, 5%, 7%, 9%, and 10%, or a range composed of any two of these values, based on the total mass of the electrolyte layer;

> the mass percentage content of the dispersant is any one of 0.1%, 0.5%, 0.8%, 1%, 1.3%, and 1.5%, or a range composed of any two of these values, based on the total mass of the electrolyte layer;
> the mass percentage content of the thickener is any one of 0.1%, 0.5%, 0.8%, 1%, 1.5%, 2.5%, and 3%, or a range composed of any two of these values, based on the total mass of the electrolyte layer; and
> the mass percentage content of the wetting agent is any one of 0.1%, 0.5%, 0.7%, 0.9%, 1.2%, and 1.5%, or a range composed of any two of these values, based on the total mass of the electrolyte layer.

A method for preparing the composite separator is not particularly limited in the present application, and the method for preparing the composite separator can be freely selected according to the purpose as long as the obtained composite separator can satisfy the above ranges for various features.

In some embodiments, the composite separator of the present application can be prepared by a method including the following steps:

> 1) dispersing the inorganic nanotubes and the solid electrolyte particles in a solvent to obtain a coating slurry;
> 2) providing the coating slurry to at least one surface of the separator substrate, and drying to obtain the composite separator.

Herein, the solvent in step 1) can be at least one of water, ethanol, acetone, and N-methylpyrrolidone.

In some embodiments, at least one of the dispersant, the wetting agent, the binder, and the thickener can be added to the solvent in step 1) to form the coating slurry.

In some embodiments, the step 1) can further include: adding the dispersant to the solvent, and stirring and dispersing for 10-60 min; then adding the inorganic nanotubes and the solid electrolyte particles separately, and stirring and dispersing continually for 10-240 min; then adding the binder, and stirring and dispersing for 10-180 min; then adding the thickener, and stirring and dispersing for 10-60 min; and finally adding the wetting agent, and stirring and dispersing for 10-60 min, to obtain the coated slurry; where the rotating speed for stirring and dispersing can be 1000-5000 r/min, and the solid content of the coated slurry can be ≤45%.

A second aspect of the present application provides a battery, including the composite separator of the first aspect.

It can be understood that the battery of the present application further includes a positive electrode sheet, a negative electrode sheet, and an outer packaging. In the present application, the positive electrode sheet, the composite separator, and the negative electrode sheet can be stacked to obtain an electrode assembly, the electrode assembly is placed in the outer packaging, and an electrolyte solution is injected into the outer packaging, and the battery is obtained by sealing.

Since the battery of the present application includes the above-mentioned composite separator, the battery has excellent electrochemical performance and service life, leading to excellent user experience, therefore it is suitable for widespread promotion and application.

Hereinafter, the technical solutions of the present application are described in detail based on specific examples.

Example 1

A battery of this example is prepared by a method including the following steps.

1) Preparation of composite separator

a dispersant is added to deionized water, and stirring and dispersing is performed for 30 min; inorganic nanotubes and solid electrolyte particles are added separately, and stirring and dispersing is performed for 60 min; then a binder is added, and stirring and dispersing is performed for 30 min; then a thickener is added, and stirring and dispersing is performed for 30 min; and finally a wetting agent is added, stirring and dispersing is performed for 30 min, to prepare a coating slurry.

The coating slurry is coated onto both surfaces of a separator substrate by a coating method using a micro-concave roller, and then drying is performed at 80°C to obtain a composite separator including an electrolyte layer.

Herein, the rotating speed for stirring and dispersing is 2000 r/min, the solid content of the coating slurry is 35%, the dispersant is modified polyamide polymer (KMT-3604, Foshan Kening New Material Co., Ltd.), the binder is polyacrylate binder (LIS-S104, Shanghai SUNRISE Polymer Material Co., Ltd.), the thickener is organical-modified bentonite (BP-188L, Shanghai Titanos Industrial Co., Ltd.), and the wetting agent is polyether-modified organic silicate polymer (KMT-5514, Foshan Kening New Material Co., Ltd.).

The inorganic nanotubes are Halloysite nanotubes, the inner diameter $d_2$ of the inorganic nanotubes is 20 nm, the ratio of the outer diameter of the inorganic nanotubes to the inner diameter of the inorganic nanotubes ($d_1:d_2$) is 3.5:1, and the length (L) of the inorganic nanotubes is 1 $\mu$m.

The solid electrolyte particles are LATP, the particle size distribution (SPAN) of the solid electrolyte particles is 0.9, the ratio of the length of the inorganic nanotubes to D50 of the solid electrolyte particles is 1.67.

In the electrolyte layer, the volume fraction (P) of the through-pores of the inorganic nanotubes is 1.22%, the mass percentage content of the dispersant is 0.3%, the mass percentage content of the binder is 5%, the mass percentage content of the thickener is 0.3%, the mass percentage content of the wetting agent is 0.3%, the mass percentage content of the inorganic nanotubes ($W_1$) is 30%, and the mass percentage content of the solid electrolyte particles ($W_2$) is 64.1%, based on the total mass of the electrolyte layer.

The separator substrate is a PE separator, the separator substrate has a thickness ($h_1$) of 9 $\mu$m, and the electrolyte layer has a single-sided thickness ($h_2$) of 2 $\mu$m.

2) Preparation of battery

A positive electrode sheet, the composite separator and a negative electrode sheet are stacked to obtain an electrolytic assembly, the electrode assembly is placed in an aluminum laminated film, and a battery is obtained by sealing.

Herein, the positive electrode sheet includes an aluminum foil and a positive electrode active layer provided on a surface of the aluminum foil, the positive electrode active layer includes lithium cobalt oxide, a conductive agent Super P, and a binder PVDF, and a mass ratio of the lithium cobalt, the conductive agent, and the binder is 96:2:2.

The negative electrode sheet includes a copper foil and a negative electrode active layer provided on a surface of the copper foil, the negative electrode active layer includes silicon-doped graphite, a conductor Super P, and a binder PAA, and a mass ratio of the silicon-doped graphite, the conductor, and the binder is 95:2:3.

An electrolyte solution includes lithium hexafluorophosphate ($LiPF_6$), EC, DEC, and DMC, in which the lithium hexafluorophosphate has a concentration of 1M, and a volume ratio of the EC, the DEC, and the DMC is 1:1:1.

Examples 2-12 and Comparative Examples 1-4

The preparation method of batteries of Examples 2-12 and Comparative Examples 1-4 is basically the same as that of Example 1, except that some parameters are different from those of Example 1 in the preparation process of composite separators, as shown in Table 1 for details.

Performance test

The composite separators and the batteries of the examples and the comparative examples are subjected to the following performance tests, and the results are shown in Table 2.

1. Morphology characterization

SEM images of the composite separator are obtained by the method specified in the industry standard JY/T 0584-2020 "General Rules for Analytical Methods of Scanning Electron Microscopy".

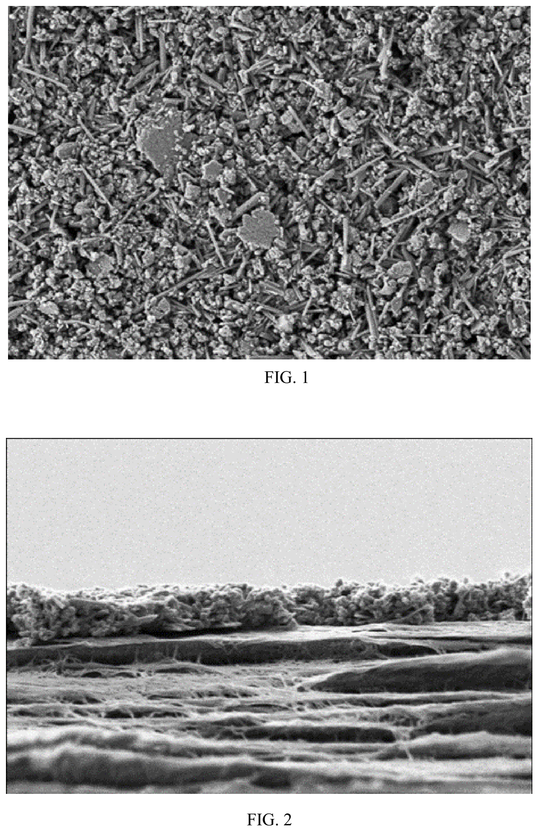

FIG. 1 is a SEM image of a surface of the composite separator in Example 2 of the present application. FIG. 2 is a SEM image of a cross section of the composite separator in Example 2 of the present application. It can be seen from FIG. 1 that the surface of the composite separator has granular-shaped structures and tubular-shaped structures, indicating that the electrolyte layer of the composite separator includes the inorganic nanotubes and the solid electrolyte particles. It can be seen from FIG. 2 that an interface of the composite separator has distinct two layers, indicating that the composite separator includes the separator substrate and the electrolyte layer provided on at least one surface of the separator substrate.

2. Heat shrinkage ratio

The heat shrinkage ratio of the composite separator is obtained in accordance with the method specified in the National Standard GB/T 36363-2018 "Performance Test of Separator for Lithium-ion Batteries". Herein, the heat treatment temperature in an oven is 130°C, and the heat treatment time is 1 h.

3. Rate performance

The rate performance of the battery is obtained according to the method specified in GB/T31486-2015 "Requirements and Test Methods for Electrical Performance of Power Battery for Electric Vehicle", which includes capacity retention rates of the battery at 1C and 3C.

4. Cycle performance

The cycle performance of the battery is obtained according to the method specified in GB/T31486-2015 "Requirements and Test Methods for Electrical Performance of Power Battery for Electric Vehicle", that is, the capacity retention rate of the battery after 1000 cycles at a rate of 1C.

5. Hot box performance test

The hot box safety performance of the battery is tested according to the methods specified in the National Standard GB/T 31485-2015 "Safety Requirements and Test Methods of Power Battery for Electric Vehicle" and GB/T 31241-2014 "Safety Requirements for Lithium-Ion Battery and Battery Assembly for Portable Electronic Product". The test condition is for the safety performance of the battery preserved in a hot box at 150°C for 10 min.

6. Thickness

The cross section of the composite separator is scanned by a scanning electron microscope (Hitachi, Japan, model: HITACHI SU8010), 10 places are randomly selected for calculating the thickness of the single-layer electrolyte layer, and the average value is calculated as the thickness value of the single-layer electrolyte layer.

7. Peeling strength

The peeling strength of the electrolyte layer in the composite separator is tested according to the method specified in the National Standard GBT 2792-2014 "Test Method for Peeling Strength of Adhesive Tape".

8. Low-temperature performance

The environmental temperature for the battery test is adjusted to -20°C through a high-and-low-temperature control box, and then the low-temperature discharging performance of the battery, that is, the discharging performance of the battery tested at -20°C with a rate of 1C, is obtained according to the method specified in the national standard GB/T31486-2015 "Electrical Performance Requirements and Test Methods of Power Battery for Electric Vehicle".

Table 1

| | P /% | d 2 /nm | d1:d 2 | L /μm | SPAN | L:D 50 | Inorganic nanotubes | | Solid electrolyte particles | | Thickness of electrode layer /μm | Thickness of separator substrate /μm |
|---|---|---|---|---|---|---|---|---|---|---|---|---|
| | | | | | | | Mass percentage /% | Type | Mass percentage /% | Typ e | | |
| Example 1 | 1. 22 | 2 0 | 3.5: 1 | 1 | 0.9 | 1.67 : 1 | 30 | Halloysite | 64.1 | LA TP | 2 | 9 |
| Example 2 | 0. 45 | 2 0 | 3.5: 1 | 1 | 0.9 | 1.67 : 1 | 10 | Halloysite | 84.1 | LA TP | 2 | 9 |
| Example 3 | 4. 55 | 2 0 | 1.9: 1 | 1 | 0.9 | 1.67 : 1 | 30 | Halloysite | 64.1 | LA TP | 2 | 9 |
| Example 4 | 0. 97 | 1 5 | 3.3: 1 | 1 | 0.9 | 1.67 : 1 | 30 | Halloysite | 64.1 | LA GP | 2 | 9 |
| Example 5 | 1. 39 | 1 7 | 3.4: 1 | 2. 5 | 0.9 | 4.17 : 1 | 30 | Boron nitride | 64.1 | LA TP | 2 | 9 |
| Example 6 | 2. 72 | 2 0 | 3.5: 1 | 1 | 0.9 | 1.67 : 1 | 70 | Halloysite | 24.1 | LA TP | 2 | 9 |
| Example 7 | 3. 93 | 2 0 0 | 2.0: 1 | 2. 5 | 0.9 | 4.17 : 1 | 30 | Halloysite | 64.1 | LA TP | 2 | 9 |
| Example 8 | 1. 22 | 2 0 | 3.5: 1 | 6 | 0.9 | 10: 1 | 30 | Halloysite | 64.1 | LA TP | 2 | 9 |
| Example 9 | 1. 22 | 2 0 | 3.5: 1 | 5 | 0.9 | 31.7 : 1 | 30 | Halloysite | 64.1 | LA TP | 2 | 9 |
| Example 10 | 1. 22 | 2 0 | 3.5: 1 | 1 | 1.6 | 1.67 : 1 | 30 | Halloysite | 64.1 | LA TP | 2 | 9 |
| Example 11 | 1. 22 | 2 0 | 3.5: 1 | 1 | 0.9 | 1.67 : 1 | 30 | Halloysite | 64.1 | LA TP | 2 | 20 |
| Example 12 | 1. 28 | 2 0 | 3.5: 1 | 1 | 0.9 | 1.67 : 1 | 30 | Halloysite | 64.1 | LA TP | 5 | 9 |
| Comparative Example 1 | / | / | / | / | 0.9 | / | / | / | 94.1 | LA TP | 2 | 9 |
| Comparative Example 2 | 3. 66 | 2 0 | 3.5: 1 | 1 | / | / | 94.1 | Halloysite | / | / | 2 | 9 |
| Comparative Example 3 | 6. 1 | 3 0 | 1.6: 1 | 1 | 0.9 | 1.67 : 1 | 30 | Halloysite | 64.1 | LA TP | 2 | 9 |
| Comparative Example 4 | 0. 03 | 3 0 | 25.0 : 1 | 2. 5 | 0.9 | 4.17 : 1 | 30 | Halloysite | 64.1 | LA TP | 2 | 9 |

Table 2

| | Peeling strength /N/m | Heat shrinkage ratio /% | | Rate performance /% | | Cycle performance /% | Low-temperature performance /% | Hot box test |
|---|---|---|---|---|---|---|---|---|
| | | MD | TD | 1C | 3C | | | |
| Example 1 | 39 | 1 | 1 | 95.7 | 80.9 | 96 | 79.7 | Not catching fire |

(continued)

| | Peeling strength /N/m | Heat shrinkage ratio /% | | Rate performance /% | | Cycle performance e /% | Low-temperatur e performance /% | Hot box test |
|---|---|---|---|---|---|---|---|---|
| | | MD | TD | 1C | 3C | | | |
| Example 2 | 43 | 1.4 | 1.3 | 94.1 | 79.6 | 94.1 | 77.4 | Not catching fire |
| Example 3 | 35 | 1.2 | 1.2 | 95.2 | 80.5 | 95.4 | 79.3 | Not catching fire |
| Example 4 | 38 | 1.1 | 1.2 | 95.4 | 80.4 | 95.3 | 79.2 | Not catching fire |
| Example 5 | 39 | 1.1 | 1.1 | 95.2 | 80.1 | 95.6 | 79.9 | Not catching fire |
| Example 6 | 30 | 1.5 | 1.5 | 93.1 | 77.6 | 92.8 | 72.6 | Not catching fire |
| Example 7 | 29 | 1.6 | 1.7 | 93.4 | 78.8 | 93.6 | 76.2 | Not catching fire |
| Example 8 | 30 | 1.7 | 1.8 | 93.4 | 77.8 | 92.6 | 75.1 | Not catching fire |
| Example 9 | 32 | 1.4 | 1.5 | 93.8 | 77.2 | 93.1 | 74.2 | Not catching fire |
| Example 10 | 33 | 1.3 | 1.4 | 93.6 | 78.1 | 93.3 | 77.2 | Not catching fire |
| Example 11 | 37 | 1.1 | 1.1 | 94.5 | 79.5 | 94.2 | 77.2 | Not catching fire |
| Example 12 | 36 | 1 | 1 | 94 | 78.9 | 94.1 | 76.1 | Not catching fire |
| Comparative Example1 | 35 | 2 | 2.1 | 87.6 | 73.3 | 87.5 | 69.1 | Catchin g fire |
| Comparative Example2 | 28 | 1.6 | 1.5 | 89.3 | 73.4 | 88.9 | 67.8 | Not catching fire |
| Comparative Example3 | 34 | 1.3 | 1.4 | 88.2 | 74.2 | 88.3 | 71.3 | Not catching fire |
| Comparative Example4 | 33 | 1.6 | 1.6 | 88.7 | 73.5 | 87.4 | 70.6 | Not catching fire |

It can be seen from Table 1 that compared with the comparative examples, the composite separator in the examples of the present application, when applied to the battery, can significantly improve the rate performance, cycle performance, low-temperature performance and safety performance of the battery. Especially, the peeling strength and the heat shrinkage performance of the composite separator can also be improved by further selecting relevant parameters of the composite separator, thereby further improving the comprehensive performance of the battery. This indicates that the composite separator, which is prepared by adding the inorganic nanotubes to the electrolyte layer and controlling the volume fraction of the through-pores of the inorganic nanotubes in the electrolyte layer, can improve the electrochemical performance of the battery.

Furthermore, it can be seen from Examples 1 and 3 that the peeling strength and the heat shrinkage performance of the composite separator can be further improved by further selecting the volume fraction of the through-pores of the inorganic nanotubes in the electrolyte layer, thereby improving the rate performance, cycle performance, and low-temperature performance of the battery.

It can be seen from Examples 1-2 and 6 that the peeling strength and the heat shrinkage performance of the composite separator can be improved by further selecting the mass percentage content of the inorganic nanotubes, thereby improving the rate performance, cycle performance, and low-temperature performance of the battery.

It can be seen from Example 1 and Example 7 that the peeling strength and the heat shrinkage performance of the composite separator can be improved by further selecting the inner diameter of the inorganic nanotubes, thereby improving the rate performance, cycle performance and low-temperature performance of the battery.

It can be seen from Example 1 and Example 8 that the comprehensive performance of the composite separator can be improved by the length of the inorganic nanotubes, thereby improving the electrochemical performance of the battery.

It can be seen from Example 1 and Example 9 that the ratio of the length of the inorganic nanotubes to the D50 of the solid electrolyte particles can affect the comprehensive performance of the composite separator, and then affect the comprehensive performance of the battery.

It can be seen from Example 1 and Example 10 that when the particle size distribution of the solid electrolyte satisfies a specific range, the composite separator has better peeling strength and heat shrinkage performance, and the composite separator can improve the electrochemical performance of the battery when applied to the battery.

It can be seen from Example 1 and Example 2 that the comprehensive performance of the composite separator can be further improved by further selecting the thickness of the electrolyte layer, thereby improving the comprehensive performance of the battery.

Finally, it should be noted that the above-mentioned embodiments are only used to illustrate, rather than to limit, the technical solutions of the present application. Although the present application has been described in detail with reference to the above-mentioned embodiments, those skilled in the art should understand that: the technical solutions recited in the above-mentioned embodiments can still be amended, or some or all of the technical features therein can be substituted equivalently. However, such amendments or substitutions do not make the essence of the corresponding technical solutions deviate from the scope of the technical solutions of the above-mentioned embodiments of the present application.

**Claims**

1. A composite separator, wherein the composite separator comprises a separator substrate and an electrolyte layer provided on at least one surface of the separator substrate;

   the electrolyte layer at least comprises inorganic nanotubes and solid electrolyte particles; and
   a volume fraction of through-pores of the inorganic nanotubes in the electrolyte layer is 0.2%-5%.

2. The composite separator according to claim 1, wherein based on a total mass of the electrolyte layer, the inorganic nanotubes have a mass percentage content of 5%-60%.

3. The composite separator according to claim 1 or 2, wherein the inorganic nanotubes have an inner diameter of 3 nm - 150 nm.

4. The composite separator according to any one of claims 1-3, wherein a ratio of an outer diameter of the inorganic nanotubes to the inner diameter of the inorganic nanotubes is (1.5-20):1.

5. The composite separator according to any one of claims 1-4, wherein the inorganic nanotubes have a length of 0.3 $\mu$m - 5 $\mu$m.

6. The composite separator according to any one of claims 1-5, wherein a ratio of the length of the inorganic nanotubes to D50 of the solid electrolyte particles is greater than 0 and not more than 30.

7. The composite separator according to any one of claims 1-6, wherein the solid electrolyte particles have a particle size distribution equal to or less than 1.5.

8. The composite separator according to any one of claims 1-7, wherein the composite separator satisfies at least one of the following:

   a. the separator substrate has a thickness of 5 $\mu$m - 30 $\mu$m, and
   b. the electrolyte layer has a thickness of 0.5 $\mu$m - 4 $\mu$m.

9. The composite separator according to any one of claims 1-8, wherein the electrolyte layer further comprises at least one of a dispersant, a wetting agent, a binder, and a thickener.

10. The composite separator according to claim 9, wherein the composite separator satisfies at least one of the following:

    a. based on the total mass of the electrolyte layer, the binder has a mass percentage content of 3%-10%;
    b. based on the total mass of the electrolyte layer, the dispersant has a mass percentage content of 0.1%-1.5%;
    c. based on the total mass of the electrolyte layer, the thickener has a mass percentage content of 0.1%-3%; and
    d. based on the total mass of the electrolyte layer, the wetting agent has a mass percentage content of 0.1%-1.5%.

11. A battery, comprising the composite separator according to any one of claims 1-10.

FIG. 1

FIG. 2

## INTERNATIONAL SEARCH REPORT

| International application No. |
|---|
| **PCT/CN2024/085688** |

| A. | CLASSIFICATION OF SUBJECT MATTER |
|---|---|

H01M10/0525(2010.01)i; H01M10/42(2006.01)i; H01M50/451(2021.01)i; H01M50/489(2021.01)i

According to International Patent Classification (IPC) or to both national classification and IPC

| B. | FIELDS SEARCHED |
|---|---|

Minimum documentation searched (classification system followed by classification symbols)

IPC: H01M10; H01M50

Documentation searched other than minimum documentation to the extent that such documents are included in the fields searched

Electronic data base consulted during the international search (name of data base and, where practicable, search terms used)

CNTXT, ENTXTC, ENTXT, VEN, CJFD: 纳米管, 固体电解质, 固态电解质, 隔膜, 隔板, 孔隙率, 通孔率, solid electrolyte, nanotube, isolating film, separator, diaphragm, porosity, hole ratio

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| A | CN 114976218 A (ZHEJIANG LIWEI ENERGY TECHNOLOGY CO., LTD.) 30 August 2022 (2022-08-30) description, paragraphs 57-60 | 1-11 |
| A | CN 117013197 A (HEBEI GUANGXING SEMICONDUCTOR TECHNOLOGY CO., LTD. et al.) 07 November 2023 (2023-11-07) description, paragraphs 30-48 | 1-11 |
| A | CN 115693032 A (LIYANG TIANMU PILOT BATTERY MATERIAL TECHNOLOGY CO., LTD.) 03 February 2023 (2023-02-03) entire document | 1-11 |
| A | CN 110224107 A (SAIC MOTOR CORP., LTD. et al.) 10 September 2019 (2019-09-10) entire document | 1-11 |
| A | DE 102017217039 A1 (ROBERT BOSCH GMBH) 28 March 2019 (2019-03-28) entire document | 1-11 |
| A | US 2016218341 A1 (UNIVERSITY OF DAYTON) 28 July 2016 (2016-07-28) entire document | 1-11 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 December 2024** | **11 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/085688**

| Patent document cited in search report | | | Publication date (day/month/year) | Patent family member(s) | | | Publication date (day/month/year) |
|---|---|---|---|---|---|---|---|
| CN | 114976218 | A | 30 August 2022 | None | | | |
| CN | 117013197 | A | 07 November 2023 | None | | | |
| CN | 115693032 | A | 03 February 2023 | None | | | |
| CN | 110224107 | A | 10 September 2019 | None | | | |
| DE | 102017217039 | A1 | 28 March 2019 | None | | | |
| US | 2016218341 | A1 | 28 July 2016 | US | 10062922 | B2 | 28 August 2018 |

Form PCT/ISA/210 (patent family annex) (July 2022)